# EUROPEAN PATENT APPLICATION

(11) **EP 3 000 623 A1**
(43) Date of publication of application: **30.03.2016**
(21) Application number: 15169997.2
(22) Date of filing: 29.05.2015
(51) Int. Cl.: B60C 15/00, B60C 15/05

(54) **PNEUMATIC TIRE**

(30) Priority: 23.09.2014 KR 20140126926
(71) Applicant: Hankook Tire Co., Ltd., Seoul 135-723 (KR)
(72) Inventor: Sohn, Gui Jung, Gyeonggi-do, 16034 (KR); Shin, Hun Cheol, Daejeon 302-757 (KR)
(74) Representative: Westphal, Mussgnug & Partner Patentanwälte mbB

(57) **Abstract**

A pneumatic tire is disclosed herein. The pneumatic tire includes a carcass composed of one or more carcass plies that extend to span a tread, sidewalls, and bead parts. Ring bead sheet cords having a predetermined longitudinal length are disposed on both sides of each end of the carcass. Each bead part-side end of the carcass is interposed between the ring bead sheet cords. The ring bead sheet cords are each formed in a closed ring shape having no disconnection along a circumferential direction of the tire. Spaces between the ring bead sheet cords and between the carcass and ring bead sheet cords are filled with a rubber mixture.

## Description

### BACKGROUND

### 1. Technical Field

The present invention relates to a pneumatic tire having no turn-up of an end of a carcass and, more particularly, to a pneumatic tire in which the arrangement structure and shapes of a carcass and bead parts are improved, thereby improving durability and manufacturing process efficiency.

### 2. Description of the Related Art

In general, pneumatic tires require that their bead parts are reinforced in order to withstand high loads. The reason for this is that stress exerted on a pneumatic tire is highest on boundary surfaces that interlock with a rim and come into a wheel.

In the structure of a conventional bead part, a bead core is provided in the bead part, a carcass is turned up and wound thereon, and a nylon or steel chafer surrounds this. The highest load is exerted on the bead part of a tire due to the load of a vehicle, and thus the risk in which a crack occurs in the bead part is very high. Furthermore, the bead part has the disadvantage of being very vulnerable to separation attributable to the bending and stretching movement during the use of the tire, and thus a problem arises in that the bead part may cause a serious car accident due to its separation. In particular, high stress is concentrated on a carcass turn-up edge because a high-strength steel material comes into contact with rubber, so that the carcass turn-up edge becomes the weakest portion of the bead part and thus is frequently subjected to problems.

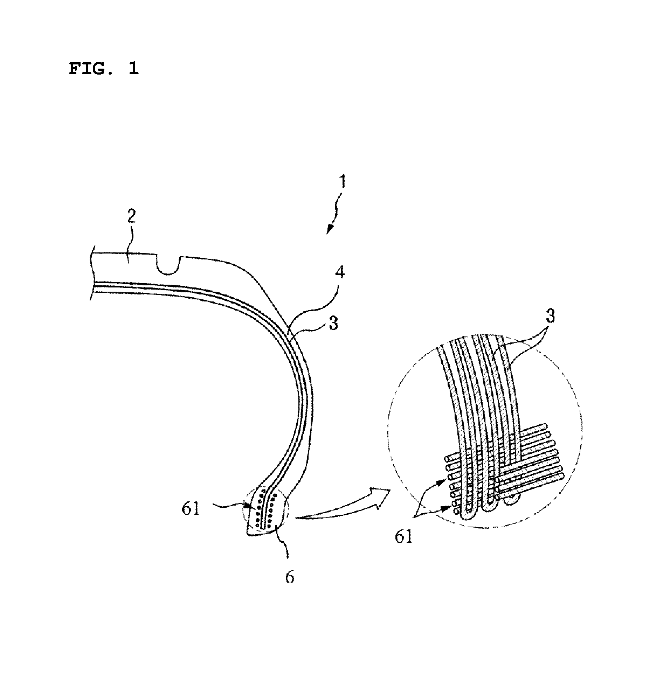

As another type of carcass reinforcement body structure, as illustrated in FIG. 1, a method has been proposed in which high-strength rubber is insulated between beads disposed in a two or more row series form, and carcass plies are located between the beads, thereby achieving fastening without requiring the winding of the carcass. Referring to FIG. 1, such a tire 1 includes a tread 2, sidewalls 4 on both sides of the tread 2, and bead parts 6 under the sidewalls 4. The bead parts 6, provided to interlock with a rim having an appropriate shape and size, are located under the sidewalls 4. Inside each of the bead parts 6, bead cords are arranged in the form of a stacked body 61 between the cord arrangements of the carcass 3.

Referring to FIG. 1, a no turn-up scheme in which bead wires are arranged in a two or more row series structure employs a method that winds a few bead wire cords in a bead part, locates high-strength rubber at the center and knits carcass plies, and then wind a few bead wires on the outer side of the bead again. This manufacturing method has problems in that it takes a considerably long time to wind the wire cords and deviations occur in parts in which the start and end portions of the wires overlap each other.

In the manufacture of tires, there is an increasing demand for cost effectiveness, with the result that it is becoming increasingly difficult to achieve manufacturing efficiency in view of continuously increasing product specifications. Therefore, there is a need for the development of a tire structure that allows a tire to be more rapidly manufactured while meeting strict quality requirements, such as high durability.

### SUMMARY

At least one exemplary embodiment of the present invention is directed to the provision of a pneumatic tire in which a method in which bead wires are arranged in a two or more row series structure is employed, and the bead wires are configured as integrated-type ring bead sheet cords having outside protrusions, so that bead wire winding time and manufacturing deviations are eliminated, thereby achieving high quality and excellent manufacturing process efficiency.

In accordance with an exemplary aspect of the present invention, there is provided a pneumatic tire including a carcass composed of one or more carcass plies that extend to span a tread, sidewalls, and bead parts, wherein:
ring bead sheet cords having a predetermined longitudinal length are disposed on both sides of each end of the carcass;
each bead part-side end of the carcass is interposed between the ring bead sheet cords; and
the ring bead sheet cords are each formed in a closed ring shape having no disconnection along a circumferential direction of the tire, and spaces between the ring bead sheet cords are filled with a rubber mixture.

Fine protrusions or depressions may be successively formed along the surfaces of the ring bead sheet cords in order to facilitate the insulation of the rubber mixture.

The carcass may include two or more carcass plies, the ring bead sheet cords each formed in a closed ring shape having no disconnection along the circumferential direction of the tire may be disposed on both sides of the carcass plies, and spaces between the ring bead sheet cords may be filled with the rubber mixture.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a schematic sectional view of a conventional pneumatic tire having a structure in which a carcass has not been turned up;
FIGS. 2A and 2B are schematic sectional views of a bead parts of a pneumatic tire according to an exemplary embodiment of the present invention;
FIG. 3 illustrates schematic sectional views of variations of the bead part of the pneumatic tire according to the other exemplary embodiments of the present invention;
FIG. 4 is a partial schematic sectional view of a bead part of a pneumatic tire according to another embodiment of the present invention;
FIG. 5 is a schematic sectional view of a rod-type ring bead sheet cord according to an exemplary embodiment of the present invention;
FIG. 6 is a schematic sectional view of an protrusion and depression-type ring bead sheet cord according to an exemplary embodiment of the present invention; and
FIG. 7 is a schematic sectional view of a curved-type ring bead sheet cord according to an exemplary embodiment of the present invention.

### DETAILED DESCRIPTION

Exemplary embodiments of the present invention will be described in detail below with reference to the accompanying diagrams.

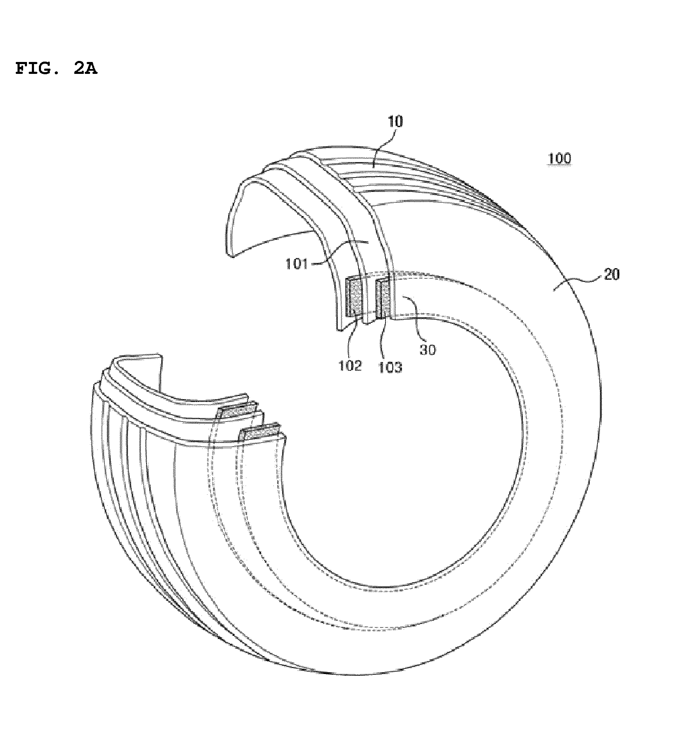

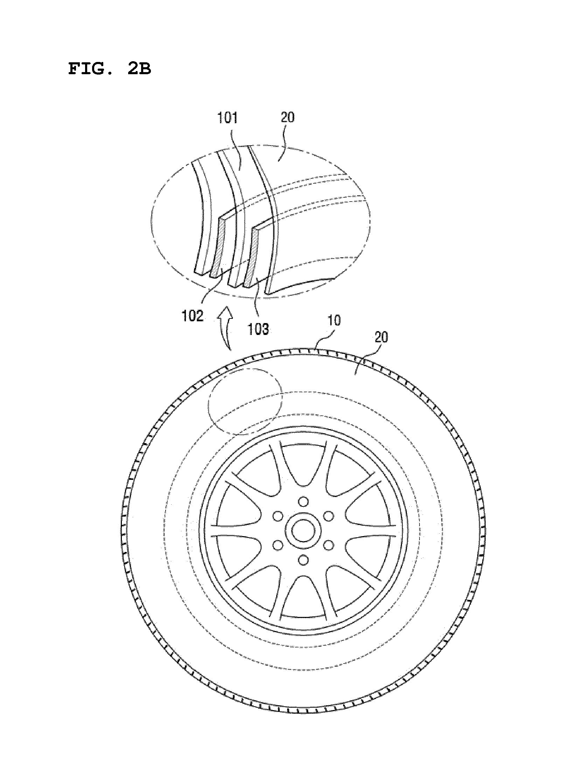

FIGS. 2A and 2B are schematic sectional views of a bead part of a pneumatic tire 100 according to an exemplary embodiment of the present invention.

Referring to FIGS. 2A and 2B, the pneumatic tire 100 according to the present embodiment is a pneumatic tire including a carcass 101 composed of one or more carcass plies that extend to span a tread 10, sidewalls 20, and bead parts 30. In the pneumatic tire 100, ring bead sheet cords 102 and 103 having a predetermined longitudinal length are disposed on both sides of each end of the carcass 101, each bead part-side end of the carcass 101 is interposed between the ring bead sheet cords 102 and 103, the ring bead sheet cords 102 and 103 are each formed in a closed ring shape having no disconnection along the circumferential direction of the tire, and spaces between the ring bead sheet cords 102 and 103 and between the carcass and the ring bead sheet cords are filled with one or more rubber mixtures.

According to the pneumatic tire of the present embodiment, the magnitude and distribution of stress applied to the carcass 101 are controlled by appropriately adjusting the shape of the carcass 101, thereby controlling deformation/stress attributable to the movement of the tire during the use of the tire. In the present embodiment, the ring bead sheet cords 102 and 103 provide the function of fastening the carcass 101 against tension occurring in the carcass cords under expansive pressure.

A fastening structure for fastening the end of the carcass 101 is formed in the ring bead sheet cords 102 and 103. In order to form the fastening structure, spaces between the ring bead sheet cords 102 and 103, each formed in a closed ring shape along the circumferential direction of the tire, and the carcass 101 are filled with an adhesive rubber mixture. A plurality of spaces defined by the carcass 101 and the ring bead sheet cords 102 and 103 does not be necessarily filled with a rubber mixture of the same material properties. In some cases, the plurality of spaces may be filled with a plurality of mixtures each having unique properties in order to define a plurality of regions.

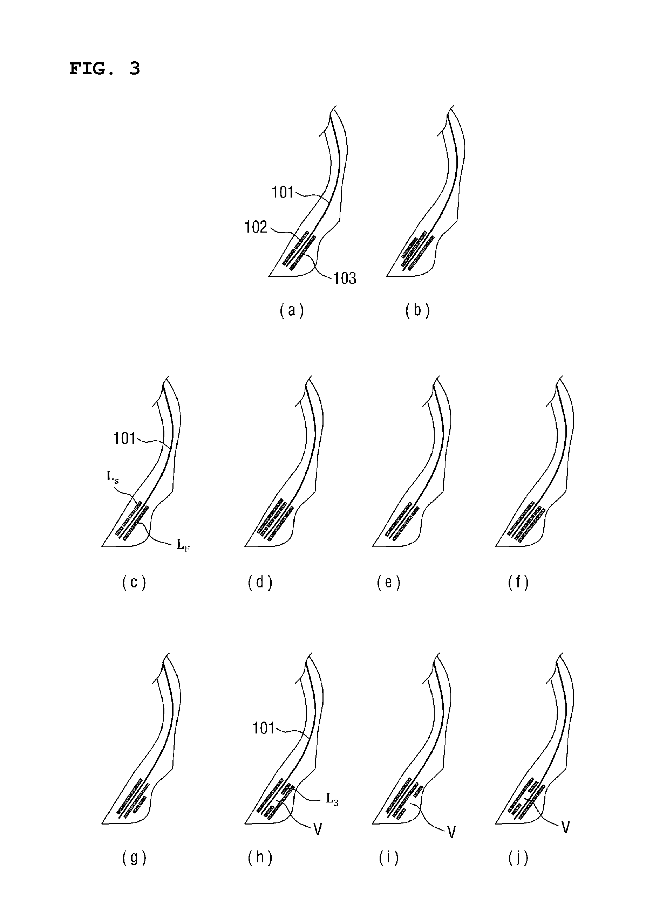

In the present embodiment, the ring bead sheet cords 102 and 103 are formed in a continuous, closed, integrated, sheet-type, ring shape. The ring bead sheet cords 102 and 103 may be implemented in various manners in terms of number, shape and size, as illustrated in FIG. 3. A plurality of ring bead sheet cords 102 or 103 may be disposed on each or one of both sides of the carcass 101. The number of ring bead sheet cords 102 or 103 disposed on one side of the carcass 101 may be the same as or different from that of ring bead sheet cords 102 or 103 disposed on the other side thereof. FIG. 3 illustrates the configurations of ring bead sheet cords according to various embodiments of the present invention. As illustrated in (d) and (j) of FIG. 3, a larger number of ring bead sheet cords may be disposed on the inner side of a carcass, whereas, as illustrated in (f) to (i) of FIG. 3, a larger number of ring bead sheet cords may be disposed on the outer side thereof.

In the present embodiment, the ring bead sheet cords 102 and 103 disposed on both sides of the carcass 101 have rod-shaped cross sections, and have ring shapes (toroidal sheet) as viewed in a circumferential direction of the tire in their entirety. The longitudinal lengths of the cross sections of the ring bead sheet cords may be the same or different. By way of example, as illustrated in (b) to (j) of FIG. 3, at least one of the ring bead sheet cords 102 and 103 may include one or more sheet cords which are arranged alongside each other and the longitudinal length Lₛ of which is shorter than the full length L_{F} of the other ring bead sheet cord(s). These one or more ring bead sheet cords having a shorter length Lₛ may be disposed on the inner or outer side of the carcass 101. When three or more ring bead sheet cords 102 and 103 are disposed, such ring bead sheet cords having a shorter length Lₛ may be disposed at the center or on the inner or outer side.

Such ring bead sheet cords having a shorter length may be formed to have a very shorter length L₃, in which implementation a void V filled with a rubber mixture may be formed between the ring bead sheet cords with a shorter length and the sheet cords may be disposed only on the outsides of the void V.

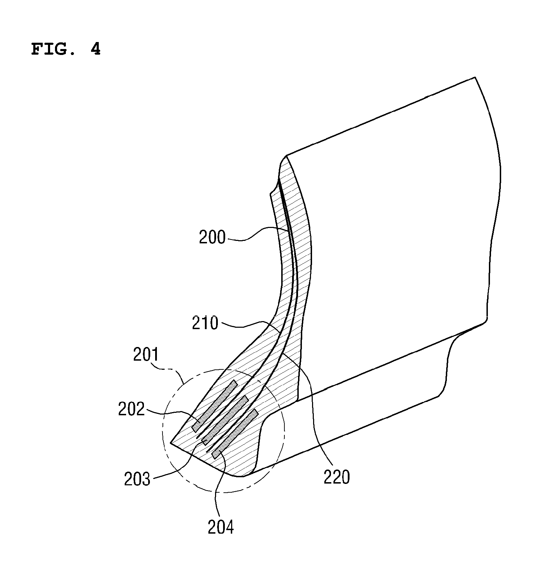

FIG. 4 is a partial schematic sectional view of a bead part of a pneumatic tire according to another embodiment of the present invention. As illustrated in FIG. 4, in the present invention, the number of carcass plies that constitute a carcass 200 is not necessarily limited to one, the carcass 200 may include two or more carcass plies 210 and 220. Also in this embodiment, ring bead sheet cords 202, 203 and 204 having a predetermined longitudinal length are formed on both sides of the carcass 200, each of the bead part-side ends of the carcass plies 210 and 220 is disposed between two of the ring bead sheet cords 202, 203 and 204, the ring bead sheet cords 202, 203 and 204 are each formed in a closed ring shape having no disconnection along the circumferential direction of the tire, and spaces between the ring bead sheet cords 202, 203 and 204 are filled with a rubber mixture.

In this embodiment, a plurality of mixtures each having unique properties may be provided in order to define a plurality of regions between the carcass plies, and the combination of the mixtures and the structure of arrangement of the regions are not limited to a particular combination and arrangement structure. As an example, a space between the inner side carcass ply 210 and the inner side ring bead sheet cord 202, a space between the inner side carcass ply 210 and the center ring bead sheet cord 203, a space between the outer side carcass ply 220 and the center ring bead sheet cord 203, and a space between the outer side carcass ply 220 and the outer side ring bead sheet cord 204 may be filled with different rubber mixtures each having unique properties, respectively. It is preferable to provide a rubber mixture having a high elastic modulus in regions between ring bead sheet cords and carcass plies.

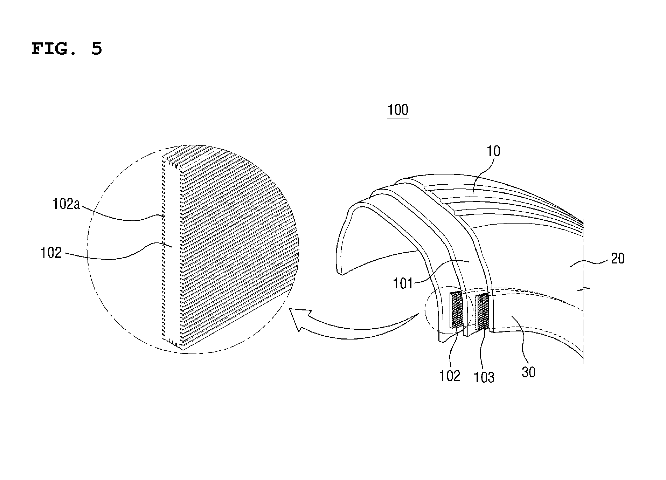

Referring to FIG. 5, in the present invention, fine protrusions or fine depressions 102a are formed on the outer peripheral surfaces of the ring bead sheet cords 102 and 103, thereby facilitating the insulation of rubber. The fine protrusion/depression structure 102a, such as fine protrusions or fine depressions, may have a curvature R in order to prevent stress from being concentrated on any one part of the ring bead sheet cords.

In the present invention, the ring bead sheet cords 102, 103, 202, 203 and 204 may be classified into a rod-type, a protrusion and depression type and a curved-type according to their fine protrusion and depression structure.

As illustrated in FIG. 5, the rod-type ring bead sheet cords 102 and 103 have a structure in which a cross-section having no protrusion, depression and a curve. The rod-type ring bead sheet cords 102 and 103 have a substantially rectangular shape cross-section and fine protrusions or depressions are regularly formed along the outer peripheral surfaces of the ring bead sheet cords.

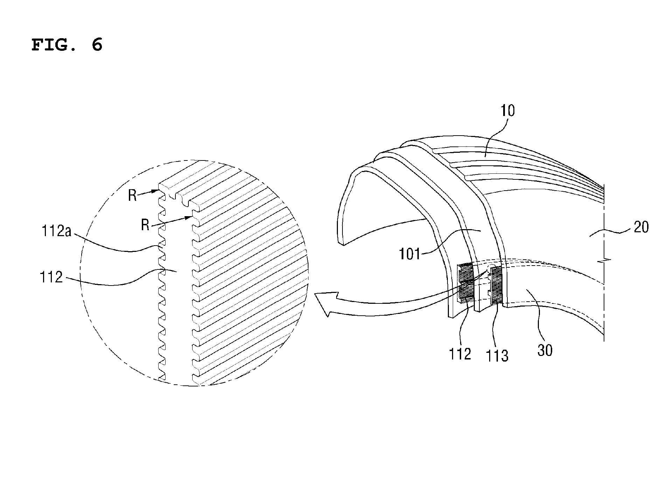

As illustrated in FIG. 6, protrusion and depression-type ring bead sheet cords 112 and 113 have a protrusion and depression structure in which depressions are regularly formed, and thus the areas between rubber and the protrusion and depression-type ring bead sheet cords 112 and 113 increase accordingly, thereby facilitating the insulation of rubber. Fine protrusions or depressions 112a having a predetermined curvature R may be additionally formed on the overall outer peripheral surfaces of the protrusion and depression-type ring bead sheet cords.

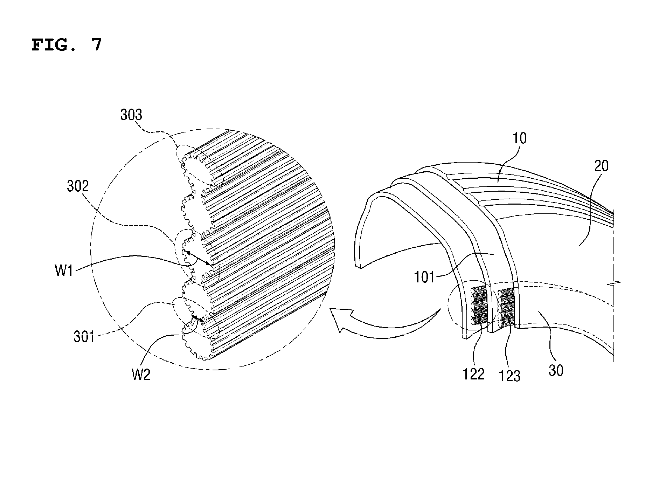

As illustrated in FIG. 7, curved-type ring bead sheet cords 122 and 123 are symmetrically formed in a corrugated or waveform shape or the like so that they have necks 301 having a narrower width W2 and convexes 302 having a wider width W1, and thus the areas between rubber and the protrusion and depression-type ring bead sheet cords 112 and 113 increase accordingly, thereby facilitating the insulation of rubber. The width of the necks 301 of the curved-type ring bead sheet cords 122 and 123 is narrower than 1 mm, and the width of convexes 302 thereof is equal to or wider than 1 mm. Fine protrusions or depression 303 may be formed along the overall outer peripheral surfaces of curved-type ring beads.

The pneumatic tires according to exemplary embodiments of the present invention can mitigate damage attributable to the deformation of a carcass and rubber compared to a conventional carcass turn-up-type tire, and thus highly contributes to preventing the separation of a bead part among bead part problems occurring in the bead parts, thereby improving safety and durability.

Furthermore, the tire having no turn-up structure according to the present invention employs integrated ring beads without requiring winding, so that the manufacturing time required to wind bead wires can be reduced, and also employs an integrated-type ring bead shape having no end, so that the end of a bead wire can be prevented from being loosened in a bead part.

While the present invention has been described in detail in conjunction with the specific embodiments of the present invention, this is merely for illustration. It will be apparent to those skilled in the art that various modifications and variations can be made without departing from the spirit and scope of the present invention. Accordingly, the scope of the present invention is not limited to the above embodiments, but should be defined based only on the attached claims.

## Claims

1. A pneumatic tire comprising a carcass composed of one or more carcass plies that extend to span a tread, sidewalls, and bead parts, wherein:
ring bead sheet cords having a predetermined longitudinal length are disposed on both sides of each end of the carcass;
each bead part-side end of the carcass is interposed between the ring bead sheet cords; and
the ring bead sheet cords are each formed in a closed ring shape having no disconnection along a circumferential direction of the tire, and spaces between the ring bead sheet cords and between the carcass and the ring bead sheet cords are filled with a rubber mixture.

2. The pneumatic tire of claim 1, wherein fine protrusions or depressions are successively formed along surfaces of the ring bead sheet cords in order to facilitate insulation of the rubber mixture.

3. The pneumatic tire of claim 1, wherein the carcass comprises two or more carcass plies, the ring bead sheet cords each formed in a closed ring shape having no disconnection along a circumferential direction of the tire are disposed on both sides of the carcass plies, and spaces between the ring bead sheet cords and between the carcass plies and ring bead sheet cords are filled with the rubber mixture.

4. The pneumatic tire of claim 1, wherein the number of one or more ring bead sheet cords disposed on one side of the carcass is different from the number of one or more ring bead sheet cords disposed on the other side of the carcass.

5. The pneumatic tire of claim 4, wherein the number of one or more ring bead sheet cords disposed on an inner side of the carcass plies is larger than the number of one or more ring bead sheet cords disposed on an outer side of the carcass plies.

6. The pneumatic tire of claim 4, wherein the number of the ring bead sheet cords disposed on an inner side of the carcass plies is smaller than that the number of the ring bead sheet cords disposed on an outer side of the carcass plies.

7. The pneumatic tire of claim 1, wherein at least one of the ring bead sheet cords comprises a plurality of small-length sheet cords that each have a length shorter than the full length of the at least one ring bead sheet cord and that are arranged alongside each other.

8. The pneumatic tire of claim 7, wherein a void to be filled with only a rubber mixture is disposed in a middle of the shorter length ring bead sheet cords, and the shorter length ring bead sheet cords are disposed on outer sides of the at least one ring bead sheet cord.

9. The pneumatic tire of claim 2, wherein the fine protrusions or depressions of the ring bead sheet cords have a predetermined curvature.

10. The pneumatic tire of any one of claim 1, wherein the ring bead sheet cords are one of a rod-type, a protrusion and depression-type, and a curved-type.

11. The pneumatic tire of any one of claim 10, wherein the rod-type ring bead sheet cords have a substantially rectangular cross-section, and fine protrusions or depressions are regularly formed along the outer peripheral surfaces of the ring bead sheet cords.

12. The pneumatic tire of any one of claim 10, wherein the protrusion and depression-type ring bead sheet cords have a protrusion and depression structure in which depressions are regularly formed, and fine protrusions or depressions are formed on the overall outer peripheral surfaces of the protrusion and depression-type ring bead sheet cords.

13. The pneumatic tire of claim 10, wherein the curved-type ring bead sheet cords are symmetrically formed in a corrugated or waveform shape so that they have necks having a narrower width and convexes having a wider width, and a width of necks of the curved-type ring bead sheet cord is narrower than 1 mm, and a width of convexes thereof is equal to or wider than 1 mm.
